# EUROPÄISCHE PATENTSCHRIFT

(11) **EP 3 423 880 B1**
(45) Veröffentlichungstag und Bekanntmachung des Hinweises auf die Patenterteilung: **12.05.2021**
(21) Anmeldenummer: 17707763.3
(22) Anmeldetag: 24.02.2017
(51) Int. Cl.: G02B 6/44

(54) **NACHRICHTENSEEKABEL SOWIE VERFAHREN UND VORRICHTUNG ZUR HERSTELLUNG DESSELBEN**
SUBMARINE COMMUNICATIONS CABLE, AND METHOD AND DEVICE FOR THE PRODUCTION THEREOF
CÂBLE SOUS-MARIN POUR TÉLÉCOMMUNICATIONS ET PROCÉDÉ ET DISPOSITIF POUR LE PRODUIRE

(30) Priorität: 03.03.2016 DE 102016002476; 29.04.2016 DE 102016005524
(43) Veröffentlichungstag der Anmeldung: 09.01.2019
(73) Patentinhaber: Norddeutsche Seekabelwerke GmbH, 26954 Nordenham (DE)
(72) Erfinder: SCHNEIDER, Patrick, 26954 Nordenham (DE); GRABHORN, Roland, 26937 Stadland (DE)
(74) Vertreter: Möller, Friedrich
(86) Internationale Anmeldenummer: PCT/EP2017/000259
(87) Internationale Veröffentlichungsnummer: WO 2017/148578

(56) Entgegenhaltungen:
- EP-A2- 0 417 784
- WO-A2-2007/022117
- GB-A- 2 051 398
- GB-A- 2 321 973

## Beschreibung

Die Erfindung betrifft ein Nachrichtenseekabel gemäß dem Oberbegriff des Anspruchs 1. Die Erfindung betrifft ferner ein Verfahren zur Herstellung eines Nachrichtenseekabels gemäß dem Oberbegriff des Anspruchs 6.

Nachrichtenseekabel verfügen über eine Seele aus von einem Kupferröhrchen umgebende optische Fasern. Diese Seele ist zur Erhöhung ihrer Zug- und Druckfestigkeit von einer Armierung umgeben, die beispielsweise aus verseilten Stahldrähten gebildet ist. Die Armierung ist von einer Umhüllung, beispielsweise eine Hüllschicht, zusammengehalten, die beim aus der WO 2007/022117 A2 bekannten

Nachrichtenseekabeln aus einem Kupferrohr gebildet ist. Dieses dient gleichzeitig als elektrischer Leiter. Das äußere Kupferrohr ist schließlich von einer äußeren Isolierung umgeben.

Ein wesentlicher Nachteil des zuvor beschriebenen bekannten Nachrichtenseekabels besteht im die aus Stahldrähten gebildete Armierung umgebenden äußeren Kupferrohr der Hüllschicht. Die Herstellung des Kupferrohrs und auch die Einbettung der Kabelseele mit den diese umgebenden Stahldrähten der Armierung ist sehr aufwendig. Außerdem verteuern die Materialkosten des äußeren Kupferrohrs Nachrichtenseekabel. Schließlich verringert das äußere Kupferrohr die Flexibilität des bekannten Nachrichtenseekabels.

Der Erfindung liegt die Aufgabe zugrunde, ein preiswertes Nachrichtenseekabel sowie ein Verfahren zur einfachen und kostengünstigen Herstellung desselben zu schaffen.

Ein Nachrichtenseekabel zur Lösung der eingangs genannten Aufgabe weist die Merkmale des Anspruch 1 auf. Demnach ist die Hüllschicht aus einer Wickelschicht aus mindestens einem dünnen flexiblen Band gebildet. Die Wickelschicht aus mindestens einem dünnen flexiblen Band erhöht auch die Flexibilität des Nachrichtenseekabels. Eine solche Wickelschicht lässt sich einfach bilden und kann aus einem preiswerten Material, beispielsweise Kunststoff, Gummi oder einem sonstigen Elastomer, gebildet sein. Dadurch kann auf die aufwendige Herstellung eines diese Schicht bildenden Kupferrohrs verzichtet werden und im Vergleich zum Kupfer preiswertes Material eingesetzt werden.

Die Wickelschicht aus mindestens einem dünnen flexiblen und/oder elastischen streifenartigen und/oder flachen Band, das auch als Tape bezeichnet wird, lässt sich einfach um die Armierung herumwickeln, um diese vor der Aufbringung der äußeren Isolierschicht zu stabilisieren. Als elektrischer Leiter dienen zumindest überwiegend das die optischen Fasern umgebende Röhrchen aus einem elektrisch leitfähigen Material, vorzugsweise Kupfer, und/oder leitfähige Stränge der Armierung.

Weiterhin ist es vorgesehen, das mindestens eine dünne streifenartige und/oder flache Band aus einem wenigstens geringfügig leitfähigen, bevorzugt semi-leitfähig gemachten, Kunststoff oder ein vergleichbares Material, beispielsweise Gummi oder ein Elastomer, zu bilden. Durch das mindestens etwas leitfähige Band bildet die daraus gebildete Wickelschicht einen zusätzlichen Leiter bzw. eine zusätzliche elektrisch-leitfähige Schicht mit einer Leitfähigkeit, die elektrische Isolationsmaterialien übersteigt. Dadurch tragen das mindestens eine Band und die daraus gebildete Wickelschicht zur elektrischen Feldglättung bei, vorzugsweise zur Beseitigung elektrischer Spitzeneffekte.

Es ist denkbar, dass der Kunststoff oder ein vergleichbares Material zur Bildung des mindestens einen Bandes selbstklebend ist. Vorzugsweise ist der Kunststoff oder dergleichen kalt selbstklebend oder mit einer mindestens einseitigen Kleberschicht versehen. Dadurch bildet die um die Armierung herum angeordnete Wickelschicht eine zusammenhängende verklebte oder vulkanisierte flüssigkeitsdichte Hüllschicht, die die Armierung nach Art eines Röhrchens umgibt und dadurch fixiert und/oder zusammenhält.

Nach einer bevorzugten Ausgestaltung des mindestens einen dünnen Bandes ist es vorgesehen, dieses aus einem sich insbesondere nach der Bildung der Wickelschicht aufweitenden, aufquellenden und/oder aufblähenden Material, vorzugsweise Kunststoff, zu bilden. Dadurch wird sichergestellt, dass vorzugsweise alle von der Wickelschicht eingeschlossenen Hohlräume, insbesondere Zwickel, zwischen den verseilten Drähten der Armierung vom Material der Wickelschicht bzw. der Hüllschicht ausgefüllt werden. Auf diese Weise werden Hohlräume, in denen sich Flüssigkeiten ansammeln können, unter der Wickelschicht vermieden. Das ist besonders wichtig bei unter Wasser verlegten Nachrichtenseekabeln.

Gemäß einer vorteilhaften Weiterbildung des Nachrichtenseekabels ist das mindestens eine flache und dünne streifenartige Band wendelartig um die Armierung herumgewickelt. Dadurch lässt sich einfach und zuverlässig eine in sich geschlossene Hüllschicht bilden. Vorzugsweise ist das mindestens eine Band unter elastischer Vorspannung um die Armierung herumgewickelt. Das führt zu einem besonders sicheren Zusammenhalt der einzelnen Drähte oder Stränge der Armierung. Insbesondere bei verseilten Drähten der Armierung wird so ein Aufspringen derselben vor der Aufbringung der äußeren Isolierung verhindert. Außerdem kann das flexible elastische Band infolge der Vorspannung sich an die die Armierung bildenden Drähte bzw. Stränge anschmiegen, insbesondere in die Zwickel zwischen benachbarten Drähten oder Strängen eintreten.

Eine Weiterbildungsmöglichkeit des Nachrichtenseekabels sieht es vor, die Wickelschicht aus mehreren Lagen, vorzugsweise mehreren um die Armierung herumgewickelter Lagen, zu bilden. Wenn in mehreren Lagen zwei oder mehr als zwei dünne, flexible Bänder wendelartig um die Armierung herumgewickelt sind, lässt sich besonders zuverlässig eine lückenlose Wickelschicht bilden. Diese Wickelschicht ergibt dann eine vollständig geschlossene schlauch- oder röhrchenartige Hüllschicht. Insbesondere ist die so gebildete Hüllschicht flexibel.

Bei einem vorteilhaft ausgestalteten Nachrichtenseekabel ist die Armierung aus mehreren ringartig um das Röhrchen herum angeordneten Zugelementen gebildet. Die Zugelemente können ein- oder auch mehrlagig um die Röhrchen herum angeordnet sein. Die Zugelemente dienen dazu, auf das Nachrichtenseekabel ausgeübte Zugkräfte aufzunehmen, damit diese nicht von anderen Komponenten des Nachrichtenseekabels, insbesondere das Röhrchen um die darin angeordneten optischen Leiter, aufgenommen werden müssen. Die Zugelemente sind bevorzugt verseilt um das Röhrchen herum angeordnet. Bei den Zugelementen kann es sich um vorzugsweise untereinander gleiche Stränge oder Drähte handeln. Bevorzugt verfügen die Stränge oder Drähte über runde Querschnitte. Aber auch andere Querschnittsformen und/oder Profilierungen der Zugelemente sind denkbar. Bei den Drähten handelt es sich vorzugsweise um Stahldrähte, beispielsweise solche aus rostfreiem Stahl. Diese können hohe Zugkräfte aufnehmen. An der Stelle der Stahldrähte können aber auch beliebig profilierte Stränge aus anderen zugfesten, insbesondere hochzugfesten, Materialien vorgesehen sein, beispielsweise Kohle- oder Glasfaser, Aluminium, Kuper oder dergleichen. Stränge aus hochzugfesten Glas- und/oder Kohlefasern kommen dann wegen ihrer hohen Zugfestigkeit und geringen Dehnung in Betracht, wenn die Armierung nicht oder nur gering leitfähig sein muss.

Ein Verfahren zur Lösung der eingangs genannten Aufgabe weist die Maßnahmen des Anspruchs 6 auf. Demnach wird die Hüllschicht durch Herumwickeln mindestens eines dünnen und/oder flexiblen, insbesondere schmalen, flachen Bandes um die Armierung hergestellt. Das Band ist bevorzugt auch elastisch dehn- und zusammenziehbar. Eine solche Hüllschicht lässt sich einfacher und kostengünstiger als eine solche aus Kupfer, insbesondere einem Kupferröhrchen, bilden.

Es ist auch vorgesehen, das mindestens eine dünne Band unter Spannung und/oder elastisch gedehnt um die Armierung herumzuwickeln. Dadurch wird eine zuverlässige Fixierung der Armierung gewährleistet. Das ist besonders wichtig bei Armierungen aus verseilten Drähten. Hier sorgt das unter Spannung und/oder elastisch gedehnt um die Drähte herumgewickelte mindestens eine Band zur Schaffung einer Wickel- oder Hüllschicht, die nach Art eines Schrumpfschlauchs ausgebildet ist und über die Eigenschaften eines Schrumpfschlauchs verfügt. Dadurch werden die Drähte oder auch Stränge zur Bildung der Armierung zusammendrückt und so ein Verschieben oder Aufspringen wirksam verhindert.

Eine weitere vorteilhafte Ausgestaltungsmöglichkeit des Verfahrens sieht es vor, das mindestens eine streifenartige dünne Band wendelartig um die Armierung herumzuwickeln. Dieses kann nach dem Wickelprinzip geschehen. Dann kann die Armierung aus mehreren vorzugsweise verseilten Armierungssträngen von der Hüll- und Wickelschicht aus dem mindestens einen Band unmittelbar nach der Herstellung der Armierung gebildet werden.

Besonders vorteilhaft ist ein Verfahren, das es vorsieht, das mindestens eine Band derart um die Armierung herumzuwickeln, dass sich Randbereiche benachbarter Windungen und/oder übereinanderliegender Bänder überlappen. Auf diese Weise kommt eine geschlossene Hüll- bzw. Wickelschicht zustande. Wenn alternativ oder zusätzlich die sich überlappenden Randbereiche des oder des jeweiligen Bandes beim Herumwickeln um die Armierung vorzugsweise selbsttätig verklebt werden, entsteht besonders zuverlässig eine vollflächige flüssigkeitsdicht geschlossene Hüll- bzw. Wickelschicht nach Art eines Schrumpfschlauchs.

Eine Weiterbildungsmöglichkeit des Verfahrens sieht es vor, dass das mindestens eine Band nach Bildung der Hüll- bzw. Wickelschicht aufquillt. Vorzugsweise setzt das Aufquellen des mindestens einen die Hüllschicht bzw. Wickelschicht bildenden Bandes erst ein, nachdem die aus dem mindestens einen Band gebildete Hüll- oder Wickelschicht mit der äußeren Isolierung versehen ist. Denkbar ist es auch, das Aufquellen des mindestens einen Bandes erst einsetzen zu lassen, wenn es mit Flüssigkeit bzw. Feuchtigkeit in Kontakt kommt oder das Aufquellen des Bandes durch Feuchtigkeit herbeizuführen. Dann wird das Material des mindestens einen aufquellenden Bandes zur von diesem umgebenden Armierung gepresst. Vor allem wenn die Armierung aus runden Drähten mit Zwickel zwischen benachbarten Drähten besteht, werden durch das aufquellende Material des mindestens einen Bands diese Zwickel bevorzugt vollständig, zumindest aber annähernd, geschlossen und dadurch Hohlräume innerhalb des Nachrichtenseekabels vermieden.

Bevorzugte Ausführungsbeispiele der Erfindung werden nachfolgend anhand der Zeichnung näher erläutert. In dieser zeigen:
- Fig. 1: einen Querschnitt durch ein Nachrichtenseekabel,
- Fig. 2: einen stark vergrößert dargestellten Längsschnitt durch einen kurzen Abschnitt einer eine Hüllschicht bildenden Wickelschicht um die Armierung;
- Fig. 3: ein alternatives Ausführungsbeispiel der Wickelschicht in einer Ansicht analog zur Fig. 2,
- Fig. 4: eine schematische Seitenansicht einer Vorrichtung im Bereich einer Einrichtung zur Herstellung der die Armierung umgebenden Wickelschicht,
- Fig. 5: eine Draufsicht auf die Vorrichtung der Fig. 4,
- Fig. 6: eine schematische Seitenansicht einer Vorrichtung zur Herstellung einer die Armierung umgebenden Wickelschicht nach einem alternativen Ausführungsbeispiel, das nicht Teil der Erfindung ist, und
- Fig. 7: eine Draufsicht auf die Vorrichtung der Fig. 6.

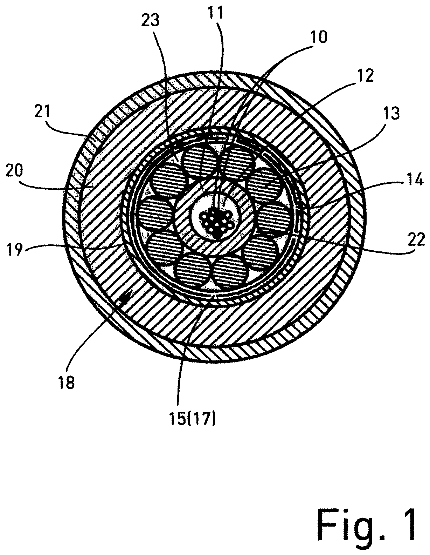

Die Fig. 1 zeigt einen Querschnitt durch ein als Nachrichtenseekabel ausgebildetes Kabel. Dieses Nachrichtenseekabel verfügt über mehrere optische Leiter 10, bei denen es sich um Lichtwellenleiter oder Glasfaserleiter handelt. Die optischen Leiter 10 sind lose oder gebündelt - vorzugsweise mit Übermaß - in einem elektrisch leitfähigen Röhrchen 11 untergebracht. Beim gezeigten Nachrichtenseekabel, das vorzugsweise zwischen Verstärkern installiert ist, dient das elektrisch leitfähige Röhrchen 11 zur Energieversorgung des Verstärkers, weswegen das gezeigte Nachrichtenseekabel auch als Verstärker-Nachrichtenseekabel dient. Die optischen Leiter 10 liegen entweder lose im etwas größeren elektrisch leitfähigen Röhrchen 11 oder befinden sich in einer gelartigen Füllung des elektrisch leitfähigen Röhrchens 11. In diesem Falle füllt die gelartige Füllung den Innenraum 12 des elektrisch leitenden Röhrchens 11 mindestens teilweise aus. Das elektrisch leitfähige Röhrchen 11 ist bevorzugt aus Kupfer gebildet, kann aber auch aus einem anderen elektrisch leitfähigen Material, beispielsweise Aluminium, gebildet sein. Das Röhrchen 11 mit den darin enthaltenen optischen Leitern 11 bildet eine Seele des Nachrichtenseekabels.

Das elektrisch leitfähige Röhrchen 11 ist außen umgeben von einer Armierung. Die Armierung dient zur Stabilisierung des Nachrichtenseekabels und zum Schutz des die Seele bildenden elektrisch leitfähigen Röhrchens 11. Dazu ist die Armierung zug- und/ oder druckfest ausgebildet. Die Armierung ist im gezeigten Ausführungsbeispiel gebildet aus mehreren zylindrischen Strängen 13 gleichen Durchmessers zwischen 0,1 mm und 5 mm sowie einer Zugfestigkeit von mindestens 500 N/mm². Bei den Strängen 13 handelt es sich bevorzugt um Stahldrähte. Es können massive Stahldrähte sein; aber auch viele dünne Stahllitzen zum Strang 13 verseilt sein. Die einzelnen Stränge 13 sind eng aneinanderliegend, also quasi lückenlos, um das Röhrchen 11 herum angeordnet. Vorzugsweise sind die Stränge 13 um das Röhrchen 11 herum verseilt.

Im gezeigten Ausführungsbeispiel ist die das elektrisch leitfähige Röhrchen 11 umgebende Armierung aus nur einer Lage dicht aneinander anliegender, vorzugsweise verseilter Stränge 13 gebildet. Es ist aber auch denkbar, die Armierung aus in mehreren Lagen angeordneten Strängen 13 zu bilden. Auch ist es denkbar, die Armierung nicht aus zylindrischen Strängen 13, sondern aus Strängen mit anderem Querschnitt, beispielsweise rechteckigem oder elliptischen Querschnitt, oder sogar profilierten Strängen zu bilden.

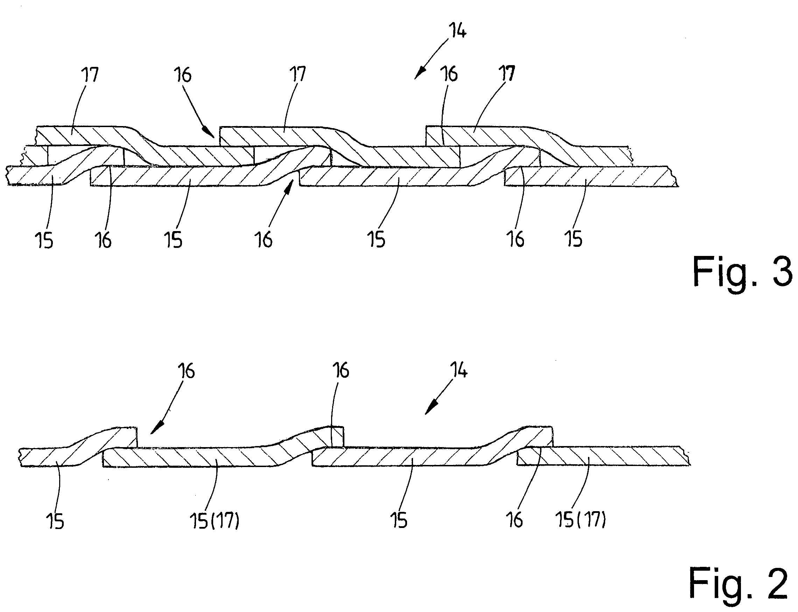

Die Armierung ist von einer Hüllschicht umgeben. Erfindungsgemäß ist die Hüllschicht als Wickelschicht 14 ausgebildet. Die Wickelschicht 14 ist gebildet aus mindestens einem dünnen und flexiblen streifenartigen und/oder flachen Band 15. Ein solches Band 15 ist biegeschlaff und stellt somit ein Tape dar. Das mindestens eine Band 15 ist wendelförmig und/oder spiralförmig um die Stränge 13 zur Bildung der die Armierung umgebenden Wickelschicht 14 herumgewickelt. Gemäß der Fig. 2 kann das mindestens eine Band 15 einlagig um die Armierung herumgewickelt sein, wobei schmale gegenüberliegende Randbereiche benachbarter Wendel des Bandes 15 sich zur Bildung von Überlappungsbereichen 16 überlappen. Dadurch stellt die aus dem aufgewickelten Band 15 gebildete Wickelschicht 14 einen in sich geschlossenen Schlauch um die Stränge 13 der Armierung dar. Gemäß der Fig. 3 ist die Wickelschicht 14 zweilagig ausgebildet. Diese zweilagige Wickelschicht 14 ist bevorzugt aus dem Band 15 und einem zweiten Band 17 gebildet. Das zweite Band 17 entspricht dem ersten Band 15 und ist bevorzugt genauso bemessen. Das Band 15 bildet die erste innere Lage und das Band 17 die zweite äußere Lage der insgesamt zweilagigen Wickelsicht 14.

Es ist auch denkbar, die einlagige Wickelschicht 14 der Fig. 2 aus zwei Bändern 15 und 17 zu bilden. Es werden dann die Bänder 15 und 17 abwechselnd nebeneinanderliegend zur Bildung der Wickelschicht 14 um die Armierung gewickelt, so dass neben einer Wendel aus dem Band 15 eine Wendel aus dem Band 17 folgt und an die Wendel aus dem Band 17 wieder eine Wendel aus dem Band 15 anschließt.

Das Band 15 bzw. die Bänder 15 und 17 sind gebildet aus einem dünnen biegeschlaffen, flexiblen und/oder elastischem dehn- bzw. zusammenziehbaren Material. Das Band 15 und/oder 17 ist somit nach Art eines Tapes ausgebildet. Als Material für das Band 15 und/oder 17 kommt ein semi-leitfähiges, vorzugsweise gering leitfähiges, Material, beispielsweise Kunststoff, Gummi oder ein sonstiges Elastomer in Betracht. Die Dicke des Bandes 15 bzw. 17 beträgt weniger als 1 mm. Insbesondere liegt die Dicke des Bandes 15 bzw. 17 im Bereich zwischen 0,5 mm und 0,01 mm. Besonders bevorzugt ist ein Dickenbereich zwischen 0,35 mm und 0,1 mm. Die Zug- bzw. Dehnfestigkeit des Bandes 15 bzw. 17 ist größer als 5 N/cm, insbesondere größer 20 N/cm.

Denkbar ist es auch, das Band 15 bzw. 17 als dünnes Gewebeband aus Kunststoff mit Verstärkungsfasern, insbesondere zur Verstärkung dienende Kunstfasern, auszubilden.

Bei der Ausgestaltung des Nachrichtenseekabels ist die Wickelschicht 14 aus einem semi-leitfähigen Band 15 und/oder 17 gebildet. Dieses entsteht bevorzugt durch die teilweise Leitbarmachung des an sich nicht leitenden Kunststoffs oder sonstigen Elastomers zur Bildung des Bandes 15 und/oder 17. Beispielsweise kann der Kunststoff leitfähig gemacht werden durch einen Zusatz von Kohlenstoff, bei dem es sich um Industrieruß handeln kann. Die Leitfähigkeit eines solchen Bandes 15 und/oder 17 ist größer als von elektrischen Isolationsmaterialien.

Die Wickelschicht 14 des Nachrichtenseekabels ist von einer vorzugsweise wasserdichten Isolierung 18 umgeben. Beim in der Fig. 1 gezeigten Nachrichtenseekabel ist die Isolierung 18 dreischichtig ausgebildet, nämlich aus einer die Wickelschicht 14 umgebenden Innenschicht 19, einer Mittelschicht 20 und einer Außenschicht 21. Bevorzugt bestehen alle drei Schichten 19, 20 und 21 der Isolierung 18 aus Kunststoff, wobei die einzelnen Schichten 19, 20 und 21 extrudiert sind. Auch wenn alle drei Schichten 19, 20 und 21 aus Kunststoff bestehen, können die einzelnen Schichten 19, 20 und 21 aus verschiedenen Kunststoffen und/oder Kunststoffen unterschiedlicher Eigenschaften bestehen. Die Wandstärke der gesamten Isolierung 18, also die Summe aller drei Schichten 19, 20 und 21, kann den Anforderungen entsprechend stark variieren, insbesondere zwischen 0,05 mm und 10 mm liegen. Denkbar wäre auch eine Isolierung 18 aus weniger als drei Schichten.

Beim in der Fig. 1 dargestellten Nachrichtenseekabel mit einer Armierung aus zylindrischen Strängen 13 entstehen zwischen benachbarten Strängen 13 und dem Außendurchmesser des Röhrchens 11 kleine, etwa dreieckförmige Zwickel 22 und zwischen den Strängen 13 und der alle Stränge 13 umgebenden Wickelschicht 14 etwas größere und auch etwa dreieckförmige Zwickel 23. Zur Vermeidung von Hohlräumen ist es bei Nachrichtenseekabeln vorgesehen, die Zwickel 22 und 23 mindestens größtenteils auszufüllen. Die inneren Zwickel 22 werden beispielsweise durch beim Herumlegen der Stränge 13 um das Röhrchen 11 gewickelte oder mitlaufende, aufquellende Fäden, insbesondere Kunststofffäden, ausgefüllt. Die äußeren Zwickel 23 werden aufgefüllt durch die Bildung der Bänder 15 und/oder 17 aus einem aufquellenden Kunststoff und gegebenenfalls zusätzliche aufquellende Fäden oder Ähnliches. Durch Polymere im Kunststoff werden die Bänder 15 und/oder 17 mit quellenden Eigenschaften versehen. Die Polymere bilden sogenannte Superabsorber-Partikel, die mikroskopisch betrachtet zerklüftet und/oder porös sind. Dadurch werden Kanäle in Richtung der Partikelkerne erzeugt, die kapillare Eigenschaften aufweisen und dadurch Feuchtigkeit oder Flüssigkeit anziehen, wodurch die Bänder 15 und/oder 17 aufquellen. Der aufquellende Kunststoff der Bänder 15 und/oder 17 führt dazu, dass er nach der Herstellung der Wickelschicht 14, insbesondere nach der anschließenden Aufbringungen der äußeren Isolierung 18 die äußeren Zwickel 23 zwischen benachbarten Strängen 13 der Armierung ausfüllt.

In den Überlappungsbereichen 16 sind die überlappenden Randbereiche benachbarter Wendel der Bänder 15 und/oder 17 durch beispielsweise elastische Vorspannung der Bänder 15 und/oder 17 beim Umwickeln der Stränge 13 der Armierung so fest elastisch vorgespannt und aneinandergedrückt, dass die Wickelschicht 14 flüssigkeitsundurchlässig ist bzw. wird. Die Wickelschicht 14 umgibt dann die Stränge 13 der Armierung prinzipiell wie ein Schrumpfschlauch. Es ist aber auch denkbar, mindestens eine Seite jedes Bandes 15 und/oder 17 mit einer Kleberschicht zu versehen, so dass die überlappenden Randbereiche benachbarter Wendel des Bandes 15 und/oder 17 in den Überlappungsbereichen 16 flüssigkeitsdicht miteinander verklebt werden. Alternativ oder zusätzlich ist es denkbar, das Band 15 und/oder 17 mit kalt-selbstklebenden Eigenschaften zu versehen, so dass die in den Überlappungsbereichen 16 übereinanderliegenden Randbereiche benachbarter Wendel des Bandes 15 und/oder 17 insbesondere bei mit elastischer Vorspannung erfolgendem Umwickeln der Stränge 13 selbsttätig miteinander verkleben oder sich sogar durch Vulkanisieren miteinander verbinden und dadurch die Überlappungsbereiche 16 zwischen benachbarten Wendeln der Bänder 15 und/oder 17 flüssigkeitsdicht werden. Die aus flexiblen dünnen Bändern 15 und/oder 17 gebildete Wickelschicht 14 übernimmt so wie bei konventionellen Nachrichtenseekabeln mit aus Kupfer gebildeter Hüllschicht das Zusammenhalten der Stränge 13 der Armierung während des Fertigungsprozesses. Außerdem führen mindestens geringfügig leitfähigen Bänder 15 und/oder 17 zu einer feldglättenden Wickelschicht 14. Die übrigen Funktionen des durch die Bänder 15 und/oder 17 ersetzten Kupfermaterials zur Bildung der Hüllschicht, insbesondere die elektrische Leitfähigkeit und die Bildung einer Wasserstoffbarriere, wird vom die optischen Leiter 10 umgebenden Röhrchen 11 aus Kupfer oder einem anderen leitfähigen Material übernommen. Das Nachrichtenseekabel mit einer als Wickelschicht 14 aus dem Band 15 und/oder 17 gebildeten Hüllschicht weist vergleichbare Eigenschaften wie ein Nachrichtenseekabel mit einer aus Kupfer gebildeten Hüllschicht auf. Darüber hinaus ist die Wickelschicht 14 aus dem Band 15 oder Bändern 15 und 17 aber flexibler und kostengünstiger sowie einfacher herstellbar.

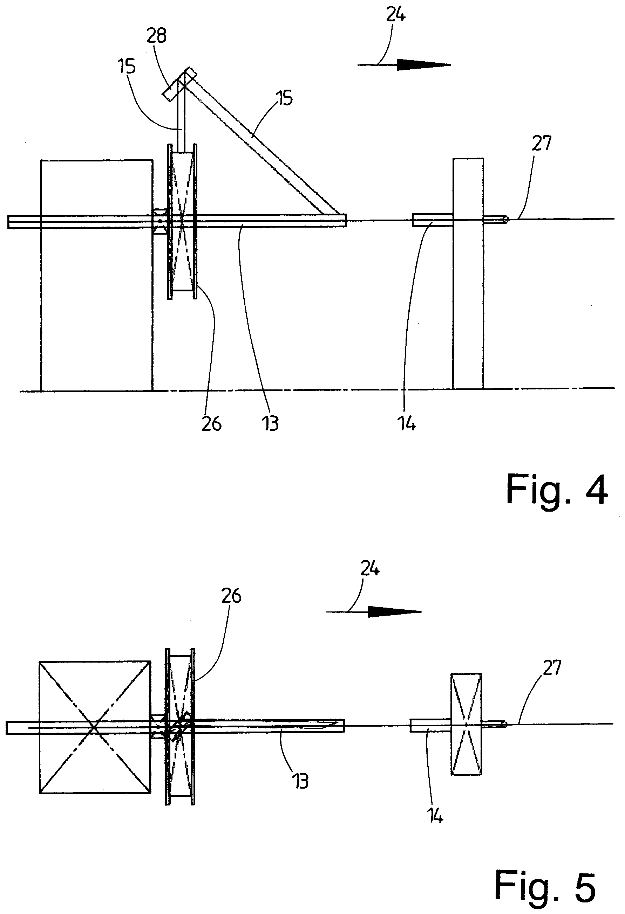

Die Fig. 4 bis 7 zeigen schematisch Abschnitte verschiedener Vorrichtungen, die nicht zur Erfindung gehören, zur Herstellung des zuvor beschriebenen Nachrichtenseekabels.

Die Fig. 4 und 5 zeigen eine Einrichtung zum Herstellen der Wickelschicht 14 aus einem einzigen Band 15. Das herzustellende Nachrichtenseekabel wird in der durch einen Pfeil 24 angedeuteten Herstellungsrichtung durch die Vorrichtung gezogen und dabei nach und nach das Röhrchen 11 mit den optischen Leitern 10, die Armierung aus den um das Röhrchen 11 herumgewickelten Strängen 13, die Wickelschicht 14 und die äußere Isolierung 18 hergestellt.

Die Fig. 4 und 5 zeigen das teilweise fertig gestellte Nachrichtenseekabel nach der in einer nicht gezeigten Verseilmaschine erfolgenden Verseilung der aus einem Bündel aus Strängen 13 gebildeten Armierung. Auf die Verseilmaschine folgt in Herstellungsrichtung 24 gesehen eine Ablaufspule 26 einer Einrichtung zur Herstellung der Wickelschicht 14. Die ringförmig ausgebildete Ablaufspule 26 ist um das herzustellende Nachrichtenseekabel herum angeordnet, so dass eine horizontale Drehachse der Ablaufspule 26 auf einer Längsmittelachse 27 des herzustellenden Nachrichtenseekabels liegt. Auf der Ablaufspule 26 ist ein Vorrat des dünnen flexiblen Bandes 15 aufgewickelt. In Radialrichtung neben der Ablaufspule 26 ist eine schräg gerichtete Umlenkung aus vorzugsweise einer frei drehbaren Walze 28 angeordnet. Die Walze 28 ist mit der Ablaufspule 26 verbunden, so dass die Ablaufspule 26 und die Walze 28 eine Einheit bilden. Die Walze 28 ist derart schräg gerichtet, dass das tangential von der Ablaufspule 26 abgezogene Band 15 an der Walze 28 um beispielsweise 45° umgelenkt wird, und zwar so, dass es in Herstellungsrichtung 24 gesehen hinter der Ablaufspule 26 mit einem Verseilwinkel von 45° auf die Armierung des Nachrichtenseekabels aufgewickelt wird. Abweichend von dem dargestellten Verseilwinkel von 45° kann der Verseilwinkel auch größer oder kleiner sein, insbesondere im Bereich zwischen 25° bis 89° liegen.

Die Ablaufspule 26 mit der daran befestigten Walze 28 wird um die Längsmittelachse 27 des herzustellenden Nachrichtenseekabels umlaufend drehend angetrieben. Die Drehzahl der Ablaufspule 26 mit der Walze 28 ist derart auf die Fertigungsgeschwindigkeit des Nachrichtenseekabels, also die Vorschubgeschwindigkeit desselben in Herstellungsrichtung 24 beim Aufbringen der Wickelschicht 14, abgestimmt, dass eine geschlossene Wickelschicht 14 mit Uberlappungsbereichen 16 aus sich überlappenden Randbereichen der einzelnen Wendel des Bandes 15 gemäß der Darstellung in der Fig. 2 entsteht.

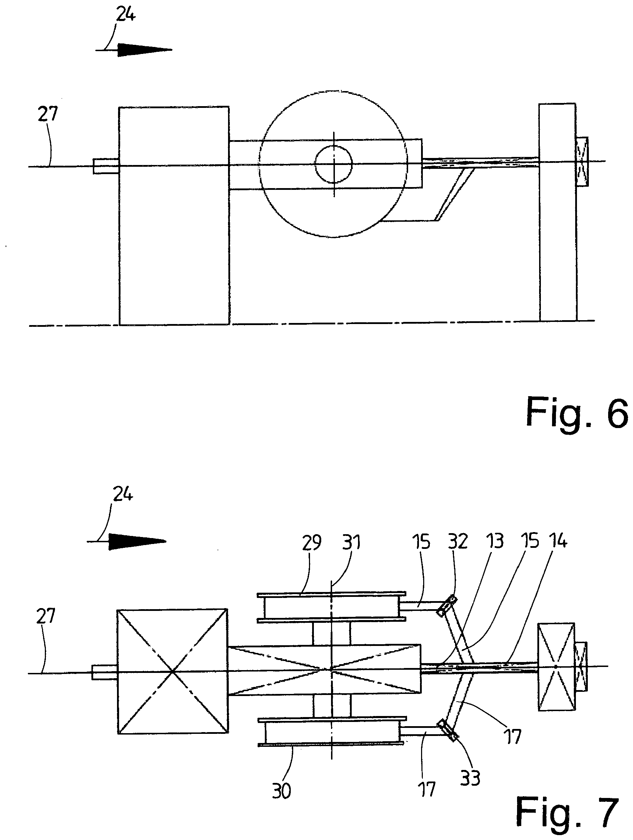

Die Fig. 6 und 7 zeigen eine alternative Einrichtung zur Herstellung der Wickelschicht 14. Hierbei ist die Einrichtung als Tangentialbandabwickler mit zwei parallelen, gleich großen Ablaufspulen 29 und 30 versehen. Die Ablaufspule 29 nimmt einen Vorrat des Bandes 15 und die Ablaufspule 30 einen Vorrat des vorzugsweise gleichen zweiten Bandes 17 auf.

Die Ablaufspulen 29 und 30 sind auf gegenüberliegenden Seiten der Längsmittelachse 27 des herzustellenden Nachrichtenseekabels angeordnet. Die Ablaufspulen 29 und 30 liegen dabei in zwei parallelen Ebenen mit gleichem Abstand neben der Längsmittelachse 27. Die Ablauflaufspulen 29 und 30 sind um eine gemeinsame Drehachse 31 drehbar. Diese Drehachse 31 verläuft senkrecht durch die Längsmittelachse 27 des herzustellenden Nachrichtenseekabels, das heißt, die Drehachse 31 schneidet die Längsmittelachse 27 rechtwinklig. Jeder Ablaufspule 29 und 30 ist im gezeigten Ausführungsbeispiel eine schräg gerichtete Walze 32, 33 zugeordnet. Die Walzen 32, 33 der gegenüberliegen Ablaufspulen 29, 30 sind gegensinnig schräg gerichtet, und zwar so, dass ihre Längsmittelachsen sich in Herstellungsrichtung 24 gesehen vor der Stelle, an der die Bänder 15 und 17 auf die Stränge 13 der Armierung aufgewickelt werden, treffen. Die Walzen 32 und 33 sind auch fest mit der jeweiligen Ablaufspule 29 und 30 verbunden.

Die Walzen 32 und 33 sind genauso wie die Ablaufspulen 29 und 30 um ihre Längsmittelachse frei drehbar. Die Drehachse 31 der beiden Ablaufspulen 29 und 30 hingegen ist in einer senkrecht durch die Längsmittelachse 27 des herzustellenden Nachrichtenseekabels verlaufenden Ebene rotierend antreibbar durch eine in den Fig. 6 und 7 nicht näher dargestellte Antriebseinheit. Infolge der um die Längsmittelachse 27 rotierenden Drehachse 31 beider Ablaufspulen 29 und 30 werden beide Bänder 15 und 17 gleichzeitig nach dem Verseilprinzip um die Stränge 13 der Armierung herumgewickelt und dabei die Wickelschicht 14 hergestellt. Die Bänder 15 und 17 laufen an diametral gegenüberliegenden Stellen auf die Armierung auf, so dass bei einer einlagigen Wickelschicht 14 gemäß der Darstellung in der Fig. 2 abwechselnd eine Wendel des Bands 15 und eine Wendel des Bands 17 mit geringfügiger Überlappung ihrer Randbereiche zur Herstellung der Überlappungsbereiche 16 aufeinanderfolgend nebeneinanderliegen.

Die in den Fig. 6 und 7 gezeigte Einrichtung mit dem zwei Ablaufspulen 29 und 30 aufweisenden Tangentialbandabwickler ermöglicht auch eine zweilagige Bildung der Wickelschicht 14, indem zunächst aus dem Band 15 eine die Stränge 13 umgebende erste Lage der Wickelschicht 14 gebildet wird und anschließend diese erste Lage der Wickelschicht 14 von einer zweiten Lage aus dem Band 17 umwickelt wird. Es entsteht dann die in der Fig. 3 dargestellte zweilagige Wickelschicht 14.

Das erfindungsgemäße Verfahren zur Herstellung der Wickelschicht um die Stränge 13 zur Bildung einer Armierung um das Röhrchen 11 wird nachfolgend näher erläutert:
Bei dem erfindungsgemäßen Verfahren wird die Hüllschicht um die Stränge 13 nicht wie bisher aus einer Kupferschicht gebildet, sondern aus einer ein- oder mehrlagigen Wickelschicht 14. Diese Wickelschicht 14 wird gebildet aus mindestens einem Band 15, gegebenenfalls auch zwei Bändern 15 und 17 oder erforderlichenfalls mehr als zwei Bändern. Die flexiblen und/oder biegeschlaffen Bänder 15 und/oder 17 sind aus einem dünnen, flachen Kunststoffstreifen gebildet. Das Band 15 und/oder 17 ist dadurch folienartig ausgebildet. Man kann daher beim folienartigen Band 15 und/oder 17 auch von einem "Tape" sprechen. Ein solches Band 15 und/oder 17 ist biegeschlaff und vor allem sehr flexibel. Das Band 15 und/oder 17 wird von den in den Fig. 4 bis 7 dargestellten Vorrichtungen um die Stränge 13 der Armierung herumgewickelt. Dieses Herumwickeln des Bands 15 und/oder 17 um die Stränge 13 erfolgt wendel- und/oder spiralartig, indem das Band 15 und/oder 17 bei einem Winkel von weniger als 90° zur Längsmittelachse 27 des herzustellenden Nachrichtenseekabels um die Stränge 13 zur Bildung der Armierung beispielsweise im Wickel- bzw. Verseilprinzip herumgewickelt wird. Dadurch entsteht die in den Fig. 2 und 3 gezeigte ein- oder zweilagige Wickelschicht 14.

Das Band 15 und/oder 17 wird bevorzugt mit Spannung stramm um die Armierung herumgewickelt. Dadurch kann die aus dem Band 15 und/oder 17 gebildete Wickelschicht 14 mit elastischer Vorspannung die Armierung umschließen und dadurch die verseilten Stränge 13 der Armierung zuverlässig nach Art eines Schrumpfschlauches zusammenhalten. Außerdem werden die überlappenden Randbereiche benachbarter Wendelungen des Bands 15 und/oder 17 durch die elastische Vorspannung beim Herumwickeln der Bänder 15 und/oder 17 um die Stränge 13 in den Überlappungsbereichen 16 aneinandergepresst, wodurch eine zumindest wasserdichte Wickelschicht 14 entsteht.

Es ist auch denkbar, dass das Band 15 und/oder 17 beim Umwickeln der Armierung im elastischen Bereich gedehnt wird, so dass es mit ständiger Vorspannung die Stränge 13 zusammenhält. Die elastische Dehnung des Bandes 15 und/oder 17 beim Herumwickeln um die Stränge 13 kann auch dazu führen, spezifische Eigenschaften der Bänder 15 bzw. 17 zu aktivieren, beispielsweise die Quellfähigkeit der Bänder 15 und/oder 17. Das Quellen der Bänder 15, 17 beginnt in einem solchen Fall dann erst, wenn die Wickelschicht 14 hergestellt ist. Dadurch können vor allem die äußeren Zwickel 23 zwischen den benachbarten Strängen 13 der Armierung vom aufquellenden Band 15 und/oder 17 zuverlässig ausgefüllt werden.

Denkbar ist es auch, dass das Band 15 bzw. 17 durch die elastische Dehnung selbstklebende, insbesondere kalt selbstklebende Eigenschaften erhält, die beispielsweise zu einer Kaltverklebung oder einem Vulkanisieren der überlappenden Randbereiche benachbarter Wendel des Bands 15, 17 den Überlappungsbereichen 16 führen.

Die Erfindung ist nicht auf die in der Fig. 1 gezeigte Konstruktion des Nachrichtenseekabels beschränkt.

### Bezugszeichenliste

- 10: optischer Leiter
- 11: Röhrchen
- 12: Innenraum
- 13: Strang
- 14: Wickelschicht
- 15: Band
- 16: Überlappungsbereich
- 17: Band
- 18: Isolierung
- 19: Innenschicht
- 20: Mittelschicht
- 21: Außenschicht
- 22: Zwickel
- 23: Zwickel
- 24: Herstellungsrichtung
- 26: Ablaufspule
- 27: Längsmittelachse
- 28: Walze
- 29: Ablaufspule
- 30: Ablaufspule
- 31: Drehachse
- 32: Walze
- 33: Walze

## Patentansprüche

1. Nachrichtenseekabel, mit von einem elektrisch leitfähigen Röhrchen (11) umgebenden optischen Leitern (10), einer das Röhrchen (11) außen umgebenden Armierung, die von einer Hüllschicht umgeben ist und einer äußeren Isolierung, wobei die Hüllschicht aus mindestens einer Wickelschicht (14) aus wenigstens einem dünnen flexiblen und/oder elastischen streifenartigen Band (15, 17) gebildet ist, und **dadurch gekennzeichnet, dass** das mindestens eine Band (15, 17) aus einem mindestens teilweise leitfähigen Kunststoff oder einem Kunststoff, der leitfähiger als ein solcher zur elektrischen Isolation ist, gebildet ist.

2. Nachrichtenseekabel nach Anspruch 1, **dadurch gekennzeichnet, dass** der Kunststoff des mindestens einen Bandes (15, 17) selbstklebend, insbesondere kalt selbstklebend, ist und/oder der Kunststoff des mindestens einen Bandes (15, 17) eine mindestens einseitige Kleberschicht aufweist.

3. Nachrichtenseekabel nach Anspruch 1 oder 2, **dadurch gekennzeichnet, dass** das mindestens eine Band (15, 17) aufweitend und/oder aufquellend ausgebildet ist.

4. Nachrichtenseekabel nach einem der vorhergehenden Ansprüche, **dadurch gekennzeichnet, dass** das mindestens eine dünne, streifenartige Band (15, 17) wendel- und/oder spiralartig mit vorzugsweise elastischer Vorspannung um die das Röhrchen (11) umgebende Armierung herumgewickelt ist und/oder die mindestens eine Wickelschicht (14) aus mehrerer Lagen um die Armierung herumgewickelter Bänder (15, 17) gebildet ist.

5. Nachrichtenseekabel nach einem oder mehreren der vorhergehenden Ansprüche, **dadurch gekennzeichnet, dass** die Armierung aus mehreren ringartigen um das Röhrchen (11) herum angeordneten, vorzugsweise verseilt angeordneten, Zugelementen, insbesondere zugfesten Strängen oder Drähten, gebildet ist.

6. Verfahren zur Herstellung eines Nachrichtenseekabels, wobei ein im Inneren mit optischen Leitern (10) versehenes Röhrchen (11) mit einer äußeren Armierung versehen wird und um die Armierung eine Hüllschicht und eine äußere Isolierung (18) aufgebracht werden, **dadurch gekennzeichnet, dass** die Hüllschicht durch unter Spannung und/oder elastisch gedehntes Herumwickeln mindestens eines dünnen Bandes (15, 17) um die Armierung hergestellt wird, wobei das mindestens eine Band (15, 17) aus einem mindestens teilweise leitfähigen Kunststoff oder einem Kunststoff, der leitfähiger als ein solcher zur elektrischen Isolation ist, gebildet wird.

7. Verfahren nach Anspruch 6, **dadurch gekennzeichnet, dass** das mindestens eine Band (15, 17) wendelartig und/oder spiralartig um die Armierung herumgeführt wird, vorzugsweise nach dem Wickel- bzw. Verseilprinzip.

8. Verfahren nach Anspruch 6 oder 7, **dadurch gekennzeichnet, dass** das mindestens eine Band (15, 17) derart um die Armierung herumgewickelt wird, dass sich Randbereiche benachbarter Windungen des mindestens einen Bandes (15, 17) zur Bildung von Überlappungsbereichen (16) überlappen.

9. Verfahren nach einem der Ansprüche 6 bis 8, **dadurch gekennzeichnet, dass** mehrere Bänder (15, 17) gleichzeitig um die Armierung herumgewickelt werden, vorzugsweise mit gleichem Verseilwinkel und/oder Überlappung der Randbereiche jedes Bandes (15, 17).

10. Verfahren nach einem der Ansprüche 6 bis 9, **dadurch gekennzeichnet, dass** überlappende Randbereiche des mindestens einen Bandes (15, 17) beim Herumwickeln um die Armierung flüssigkeitsdichte Überlappungsbereiche (16) ausbilden und/oder beim Herumwickeln des mindestens einen Bandes (15, 17) um die Armierung die Randbereiche benachbarter Windungen des Bandes (15, 17) im Überlappungsbereich (16) verklebt werden, vorzugsweise selbsttätig.

11. Verfahren nach einem der Ansprüche 6 bis 10, **dadurch gekennzeichnet, dass** das mindestens eine Band (15, 17) nach der Bildung einer die Hüllschicht bildender Wickelschicht (14) aufquillt, vorzugsweise die Wickelschicht (14) erst nach ihrer Herstellung und/oder nach der Fertigstellung der die Wickelschicht (14) umgebenden äußeren Isolierung (18) aufquillt.

## Claims

1. Submarine communications cable comprising optical conductors (10) surrounded by an electrically conductive tube (11), an armouring, which surrounds the tube (11) externally and is surrounded by a jacket layer, and an external insulation, wherein the jacket layer is formed by at least one wrapped layer (14) of at least one thin flexible and/or elastic strip-like band (15, 17), and **characterized in that** the at least one band (15, 17) is formed from an at least partially conductive plastic or a plastic which is more conductive than such a plastic for the electrical insulation.

2. Submarine communications cable according to Claim 1, **characterized in that** the plastic of the at least one band (15, 17) is self-bonding, in particular cold self-bonding, and/or the plastic of the at least one band (15, 17) has an adhesive layer at least on one side.

3. Submarine communications cable according to Claim 1 or 2, **characterized in that** the at least one band (15, 17) is of an expanding and/or swelling form.

4. Submarine communications cable according to one of the preceding claims, **characterized in that** the at least one thin, strip-like band (15, 17) is wrapped with preferably elastic pre-tensioning in a helical and/or spiral manner around the armouring surrounding the tube (11) and/or the at least one wrapped layer (14) is formed by multiple layers of bands (15, 17) wrapped around the armouring.

5. Submarine communications cable according to one or more of the preceding claims, **characterized in that** the armouring is formed by multiple ring-like tensile elements, in particular high-tensile strands or wires, which are arranged around the tube (11), preferably arranged in a stranded manner.

6. Method for producing a submarine communications cable, wherein a tube (11) provided with optical conductors (10) in the interior is provided with an outer armouring, and a jacket layer and an external insulation (18) are applied around the armouring, **characterized in that** the jacket layer is produced by wrapping at least one thin band (15, 17) around the armouring under tension and/or while elastically stretched, wherein the at least one band (15, 17) is formed from an at least partially conductive plastic or a plastic which is more conductive than such a plastic for the electrical insulation.

7. Method according to Claim 6, **characterized in that** the at least one band (15, 17) is led around the armouring in a helical and/or spiral manner, preferably according to the winding or stranding principle.

8. Method according to Claim 6 or 7, **characterized in that** the at least one band (15, 17) is wrapped around the armouring such that marginal regions of adjacent windings of the at least one band (15, 17) overlap to form overlapping regions (16).

9. Method according to one of Claims 6 to 8, **characterized in that** multiple bands (15, 17) are wrapped simultaneously around the armouring, preferably with the same stranding angle and/or overlapping of the marginal regions of each band (15, 17).

10. Method according to one of Claims 6 to 9, **characterized in that** overlapping marginal regions of the at least one band (15, 17) form liquid-tight overlapping regions (16) during wrapping around the armouring and/or, during the wrapping of the at least one band (15, 17) around the armouring, the marginal regions of adjacent windings of the band (15, 17) are adhesively bonded in the overlapping region (16), preferably of their own accord.

11. Method according to one of Claims 6 to 10, **characterized in that** the at least one band (15, 17) swells after the formation of a wrapped layer (14) forming the jacket layer, preferably the wrapped layer (14) only swells after it has been produced and/or after the external insulation (18) surrounding the wrapped layer (14) has been completed.

## Revendications

1. Câble de télécommunication sous-marin, comprenant des conducteurs optiques (10) entourés d'un tube électriquement conducteur (11), un blindage qui entoure extérieurement le tube (11) et qui est entouré d'une couche d'enveloppe et une isolation extérieure, la couche d'enveloppe étant formée d'au moins une couche d'enroulement (14) formée d'au moins une bande mince flexible et/ou élastique (15, 17) de type ruban et **caractérisé en ce que**
l'au moins une bande (15, 17) est formée à partir d'une matière synthétique au moins partiellement conductrice ou d'une matière synthétique plus conductrice que celle destinée à l'isolation électrique.

2. Câble de télécommunication sous-marin selon la revendication 1, **caractérisé en ce que** la matière synthétique de l'au moins une bande (15, 17) est auto-adhésive, en particulier auto-adhésive à froid, et/ou la matière synthétique de l'au moins une bande (15, 17) comporte une couche adhésive au moins d'un côté.

3. Câble de télécommunication sous-marin selon la revendication 1 ou 2, **caractérisé en ce que** l'au moins une bande (15, 17) est conçue pour s'expanser et/ou se gonfler.

4. Câble de télécommunication sous-marin selon l'une des revendications précédentes, **caractérisé en ce que** l'au moins une bande mince (15, 17) de type ruban est enroulée en hélice et/ou en spirale avec de préférence une précontrainte élastique autour du blindage qui entoure le tube (11) et/ou l'au moins une couche d'enroulement (14) est formée de plusieurs couches de bandes (15, 17) enroulées autour du blindage.

5. Câble de télécommunication sous-marin selon une ou plusieurs des revendications précédentes, **caractérisé en ce que** le blindage est formé d'une pluralité d'éléments de traction annulaires, notamment des cordes ou des fils résistants à la traction, disposés, de préférence toronnés, autour du tube (11).

6. Procédé de fabrication d'un câble de télécommunication sous-marin, un tube (11) pourvu à l'intérieur de conducteurs optiques (10) est pourvu d'un blindage extérieur et une couche d'enveloppe et une isolation extérieure (18) sont appliquées autour du blindage, **caractérisé en ce que** la couche d'enveloppe est réalisée par enroulement d'au moins une bande mince (15, 17) autour du blindage sous tension et/ou de manière étirée élastiquement, l'au moins une bande (15, 17) étant formée à partir d'une matière synthétique au moins partiellement conductrice ou une matière synthétique qui est plus conductrice que celle destinée à l'isolation électrique.

7. Procédé selon la revendication 6, **caractérisé en ce que** l'au moins une bande (15, 17) est guidée en hélice et/ou en spirale autour du blindage, de préférence selon le principe d'enroulement ou de toronnage.

8. Procédé selon la revendication 6 ou 7, **caractérisé en ce que** l'au moins une bande (15, 17) est enroulée autour du blindage de manière à ce que les zones de bord d'enroulements adjacents de l'au moins une bande (15, 17) se chevauchent pour former des zones de chevauchement (16).

9. Procédé selon l'une des revendications 6 à 8, **caractérisé en ce que** plusieurs bandes (15, 17) sont enroulées en même temps autour du blindage, de préférence avec le même angle de toronnage et/ou le même chevauchement des zones de bord de chaque bande (15, 17).

10. Procédé selon l'une des revendications 6 à 9, **caractérisé en ce que** les zones de bord, qui se chevauchent, de l'au moins une bande (15, 17) forment des régions de chevauchement (16) étanches aux liquides lors de l'enroulement autour du blindage et/ou les zones de bord d'enroulements adjacents de la bande (15, 17) dans la zone de chevauchement (16) sont collées, de préférence automatiquement, lors de l'enroulement de l'au moins une bande (15, 17) autour du blindage.

11. Procédé selon l'une des revendications 6 à 10, **caractérisé en ce que** l'au moins une bande (15, 17) gonfle après la formation d'une couche d'enroulement (14) formant la couche d'enveloppe, de préférence la couche d'enroulement (14) gonfle seulement après sa fabrication et/ou après l'achèvement de l'isolation extérieure (18) entourant la couche d'enroulement (14).
